# EUROPEAN PATENT APPLICATION

(11) **EP 4 692 903 A1**
(43) Date of publication of application: **11.02.2026**
(21) Application number: 24780795.1
(22) Date of filing: 29.03.2024
(51) Int. Cl.: G02C 7/00, G02B 1/115, G02C 7/02, G02C 7/10

(54) **SPECTACLE LENS AND SPECTACLES**

(30) Priority: 31.03.2023 JP 2023058665
(71) Applicant: Hoya Lens Thailand Ltd., Pathumthani 12130 (TH)
(72) Inventor: KAWAJI, Munenori, Tokyo 160-8347 (JP); UEDA, Kyosuke, Tokyo 160-8347 (JP)
(74) Representative: Hoffmann Eitle
(86) International application number: PCT/JP2024/013020
(87) International publication number: WO 2024/204700

(57) **Abstract**

Provided is a spectacle lens including a lens substrate, and a multilayer film located on at least one surface of the lens substrate, in which the multilayer film includes one or more porous layers, the porous layer including carbon, in a case where the multilayer film is located on an object-side surface of the lens substrate, an average reflectance of the object-side surface of the spectacle lens in a wavelength region of 400 to 700 nm is 0.500% or less, and in a case where the multilayer film is located on an eyeball-side surface of the lens substrate, an average reflectance of the eyeball-side surface of the spectacle lens in a wavelength region of 350 to 700 nm is 0.800% or less.

## Description

### Technical Field

The present invention relates to a spectacle lens and spectacles.

### Background Art

A spectacle lens is normally manufactured by forming a functional film for providing a desired function to the spectacle lens on the surface of a lens substrate. As such a functional film, a multilayer film may be provided on the surface of a lens substrate (for example, see PTL 1).

### Citation List

### Patent Literature

PTL 1: Japanese Patent No. 6016155

### Summary of Invention

### Technical Problem

In recent years, various products featuring various functions have been proposed and sold in the market of spectacle lenses. In order to provide spectacle lenses with higher added value in the market, it is desirable that the spectacle lenses have good appearance quality and are easy to handle.

An object of one aspect of the present invention is to provide a spectacle lens having good appearance quality and being easy to handle.

### Solution to Problem

With regard to the ease of handling a spectacle lens, a spectacle lens to which dust is less likely to adhere is easy to handle and is preferred.

Further, with respect to the appearance quality of spectacle lenses, there has been recent demand for a spectacle lens with which it is difficult to be conscious of the reflected light of the spectacle lens on the screen of a personal computer (PC) or a smartphone. This is due to the following reasons.

In recent years, online conference techniques using the Internet have been generalized, and opportunities to make remote conference through cameras have increased. An image through a camera is generated by an image sensor that receives light. Accordingly, since the reflected light from the surface of the spectacle lens enters the image sensor, the facial expression of the spectacle wearer appearing on the screen through the camera becomes difficult to see due to the reflected light.

As a result of intensive studies on the above points, the present inventors have newly discovered that, by providing a multilayer film including a porous layer containing carbon on the surface of a lens substrate and controlling the reflection characteristics of the spectacle lens surface having the multilayer film as described later, reflected light from the spectacle lenses of the spectacle wearer becomes less noticeable in images taken through a camera, and it has also been newly found that the adhesion of dust caused by static electricity can be suppressed. In PCs and smartphones, a camera is installed near the screen, and the primary light source incident on the spectacle lenses is the screen itself. However, a spectacle lens having a multilayer film including a porous layer containing carbon and having the reflection characteristics described later is less likely to reflect light from the screen, and thus reflected light from the spectacle lens is less likely to appear in images taken through a camera. In addition, it has also been newly found, as a result of extensive studies by the present inventors, that a spectacle lens provided with a multilayer film including a porous layer containing carbon (also referred to as a "carbon-containing porous layer") has a low surface resistivity and is less likely to become electrostatically charged.

One aspect of the present invention is as follows.
[1] A spectacle lens including a lens substrate, and a multilayer film located on at least one surface of the lens substrate, in which
   the multilayer film includes one or more porous layers, the porous layer including carbon,
   in a case where the multilayer film is located on an object-side surface of the lens substrate, an average reflectance of the object-side surface of the spectacle lens in a wavelength region of 400 to 700 nm is 0.500% or less, and
   in a case where the multilayer film is located on an eyeball-side surface of the lens substrate, an average reflectance of the eyeball-side surface of the spectacle lens in a wavelength region of 350 to 700 nm is 0.800% or less.
[2] The spectacle lens according to [1], in which the multilayer film is provided on the object-side surface and the eyeball-side surface of the lens substrate, respectively,
   the average reflectance of the object-side surface of the spectacle lens in the wavelength region of 400 to 700 nm is 0.500% or less, and
   the average reflectance of the eyeball-side surface of the spectacle lens in a wavelength region of 350 to 700 nm is 0.800% or less.
[3] The spectacle lens according to [2], in which the average reflectance of the object-side surface of the spectacle lens in the wavelength region of 400 to 700 nm is 0.150% or less, and
   the average reflectance of the eyeball-side surface of the spectacle lens in a wavelength region of 350 to 700 nm is 0.300% or less.
[4] The spectacle lens according to any one of [1] to [3], in which a carbon content of the porous layer is 5.0 atomic% or more.
[5] The spectacle lens according to any one of [1] to [4], in which a carbon content of the porous layer is 15.0 atomic% or less.
[6] The spectacle lens according to any one of [1] to [5], in which the multilayer film includes one or more high-refractive index layers and one or more low-refractive index layers, and
   a total number of layers of the high-refractive index layer and the low-refractive index layer is 4 or more and 11 or less.
[7] The spectacle lens according to [6], in which one or more of the low-refractive index layers are the porous layers.
[8] The spectacle lens according to [7], in which the porous layer is a silicon oxide-containing layer.
[9] The spectacle lens according to any one of [1] to [8], in which a refractive index of the porous layer is 1.20 or more and 1.38 or less.
[10] The spectacle lens according to any one of [1] to [9], in which the multilayer film includes one or more layers having a refractive index of 2.00 or more and 2.40 or less.
[11] The spectacle lens according to any one of [1] to [10], in which the multilayer film includes one or more layers having a refractive index of 2.00 or more and 2.20 or less.
[12] The spectacle lens according to any one of [1] to [11], in which the multilayer film includes one or more layers having a refractive index of 1.44 or more and 1.49 or less.
[13] The spectacle lens according to any one of [1] to [12], in which the average reflectance of the object-side surface of the spectacle lens in the wavelength region of 400 to 700 nm is 0.150% or less,
   the average reflectance of the eyeball-side surface of the spectacle lens in a wavelength region of 350 to 700 nm is 0.300% or less,
   a carbon content of the porous layer is 5.0 atomic% or more and 15.0 atomic% or less,
   the multilayer film includes one or more high-refractive index layers and one or more low-refractive index layers,
   a total number of layers of the high-refractive index layer and the low-refractive index layer is 4 or more and 11 or less,
   one or more of the low-refractive index layers are the porous layers,
   the porous layer is a silicon oxide-containing layer,
   a refractive index of the porous layer is 1.20 or more and 1.38 or less, and
   the multilayer film includes one or more layers having a refractive index of 2.00 or more and 2.20 or less and one or more layers having a refractive index of 1.44 or more and 1.49 or less.
[14] Spectacles including the spectacle lens according to any one of [1] to [13].

### Advantageous Effects of Invention

According to one aspect of the present invention, it is possible to provide a spectacle lens having good appearance quality and being easy to handle. In addition, according to one aspect of the present invention, it is possible to provide spectacles including the spectacle lens.

### Description of Embodiments

Definitions of terms and/or measurement methods of the present invention will be described hereinbelow.

The "object-side surface" is the surface positioned on the object side when spectacles having spectacle lenses are worn by a wearer. The "eyeball-side surface" is the surface on the other side, namely the surface positioned on the eyeball side when spectacles having spectacle lenses are worn by a wearer.

The reflectance measured for the surface of the spectacle lens is a reflectance for light normally incident on the surface. The incident angle of light during reflectance measurement can be set by a reflectance measurement device. With regard to the incident angle of light entering the surface to be measured, the incident angle of perpendicular incidence light is, strictly speaking, 0°. However, from the viewpoint of the measurement optical system, some reflectance measurement devices may use incident light with an incident angle of approximately 0° to 5° as perpendicular incidence light. Such cases are also intended to be included in the term "perpendicular incidence" as used in the present invention and in the present specification.

The reflectance can be measured, for example, at a pitch of 1 to 5 nm. In addition, the average reflectance in a certain wavelength region is an arithmetic average of the reflectances obtained in the wavelength region.

In addition, some reflectance measurement devices may be affected by multiple reflections between a surface to be measured and an opposing surface. In such a case, multiple reflection may be suppressed by applying a treatment (for example, a black coating treatment or the like) for absorbing or scattering light rays to the opposing surfaces.

The "film thickness" described in the present specification is a physical film thickness. The film thickness can be determined by a known film thickness measurement method. For example, the film thickness can be determined by converting the optical film thickness measured with an optical film thickness measuring device into the physical film thickness.

The "porous layer" is a layer having voids, and the "porous layer" in the present invention and the present specification refers to a layer having a filling factor of 0.95 or less. The filling factor is "filling factor=volume of the layer excluding voids/total volume of the layer". The filling factor can be obtained by known methods. For example, regarding the filling factor of a thin film, assuming that the filling factor of the film is denoted as p, the refractive index of the film as nf, and the refractive indices of the columnar portion of the film and the medium occupying the voids as ns and nv, respectively, the relationship "nf=pns+(1-p)nv" holds. Therefore, the filling factor can be calculated from the refractive index. In addition, the filling factor can be calculated from the film thickness and areal density obtained by transmission electron microscopy (TEM) and Rutherford backscattering spectrometry (RBS).

The presence of carbon in a certain layer can be confirmed by the detection of carbon using Rutherford backscattering spectrometry (RBS). According to the RBS, it is possible to determine the contents of Si element, O element, C element, and various other elements.

### [Spectacle Lens]

Hereinafter, a spectacle lens according to one aspect of the present invention will be described in more detail.

### <Multilayer Film>

The spectacle lens has a multilayer film on at least one surface of a lens substrate. The lens substrate may have a multilayer film including the carbon-containing porous layer only on the object-side surface of the lens substrate, may have a multilayer film including the carbon-containing porous layer only on the eyeball-side surface of the lens substrate, or may have a multilayer film including the carbon-containing porous layer on each of the object-side surface and the eyeball-side surface of the lens substrate. In a case where the multilayer films each including a carbon-containing porous layer are located on both sides of the lens substrate, these multilayer films can be the same multilayer film or a different multilayer film.

The multilayer film including the carbon-containing porous layer may be located directly on the surface of the lens substrate or indirectly on the surface of the lens substrate via one or more other layers. Examples of the layer that can be formed between the lens substrate and the multilayer film including the carbon-containing porous layer include a polarizing layer, a light control layer and a hard coat layer. By providing the hard coat layer, the durability (strength) of the spectacle lens can be enhanced. The hard coat layer may be, for example, a cured layer generated by curing a curable composition. For the details on the hard coat layer, see, for example, paragraphs 0025 to 0028 and 0030 of Japanese Patent Application Publication No. 2012-128135. In addition, a primer layer for improving adhesive property may be formed between the lens substrate and the multilayer film. For the details on the primer layer, see, for example, paragraphs 0029 and 0030 of Japanese Patent Application Publication No. 2012-128135.

The multilayer film can have a laminated structure in which high-refractive index layers and low-refractive index layers are alternately laminated. In the present invention and the present specification, the terms "high" and "low" in relation to the high-refractive index layer and the low-refractive index layer are used as relative expressions with respect to the refractive index of the lens substrate included in the spectacle lens. The high-refractive index layer means a layer having a higher refractive index than the lens substrate. The low-refractive index layer means a layer having a lower refractive index than the lens substrate. The multilayer film may include three or more layers having different refractive indices. In the present invention and this specification, the "refractive index" refers to the refractive index with respect to light having a wavelength of 500 nm. The lens substrate of the spectacle lens generally has a refractive index of about 1.50 to 1.76, the low-refractive index layer can be a layer having a refractive index of 1.50 or less, and the high-refractive index layer can be a layer having a refractive index of 1.76 or more.

The refractive index of the high-refractive index layer can be, for example, 2.00 or more and 2.40 or less, and 2.00 or more and 2.20 or less.

The carbon-containing porous layer can be a high-refractive index layer or a low-refractive index layer, and is preferably a low-refractive index layer. The refractive index of the carbon-containing porous layer can be, for example, 1.20 or more and 1.38 or less.

The refractive index of the low-refractive index layer other than the carbon-containing porous layer can be, for example, 1.44 or more and 1.49 or less.

However, as described above, since the notations "high" and "low" regarding the high-refractive index layer and the low-refractive index layer are relative notations with respect to the refractive index of the lens substrate, the refractive indexes of the high-refractive index layer and the low-refractive index layer are not limited to the above ranges.

The filling factor of the carbon-containing porous layer is 0.95 or less, preferably 0.90 or less, more preferably 0.80 or less, more preferably 0.70 or less, 0.60 or less, and 0.50 or less in this order, as described above. The porous layer has a tendency to have a lower refractive index as the filling factor becomes lower. The filling factor of the carbon-containing porous layer can be, for example, 0.30 or more, 0.35 or more, or 0.40 or more.

The carbon content of the carbon-containing porous layer is preferably 5.0 atomic% or more, more preferably 5.6 atomic% or more. In an aspect, the carbon content of the carbon-containing porous layer can be 15.0 atomic% or less or 14.3 atomic% or less. The present inventors have presumed that a high carbon content is preferable, so long as the reduction in the transmission due to the carbon element is not significant, from the viewpoint of reducing the surface resistance value of the spectacle lens. Therefore, the carbon content of the carbon-containing porous layer may exceed the above range.

A high-refractive index material constituting the high-refractive index layer and a low-refractive index material constituting the low-refractive index layer may respectively be an inorganic material, an organic material or an inorganic/organic composite material and is preferably an inorganic material from the viewpoint of film-forming properties and the like. That is, the multilayer film is preferably an inorganic multilayer film. Specifically, examples of the high-refractive index material configuring the high-refractive index layer may include one or a mixture of two or more oxides selected from the group consisting of zirconium oxides (for example, ZrO₂), tantalum oxides (for example, Ta₂O₅), titanium oxides (such as TiO₂), aluminum oxides (Al₂O₃), yttrium oxides (such as Y₂O₃), hafnium oxides (such as HfO₂) and niobium oxides (such as Nb₂O₅). Examples of the low-refractive index material configuring the low-refractive index layer may include one or a mixture of two or more oxides or fluorides selected from the group consisting of silicon oxides (such as SiO₂), magnesium fluorides (such as MgF₂) and barium fluorides (such as BaF₂). In these examples, the oxides and fluorides are indicated by stoichiometric composition, but the oxides and fluorides including oxygen or fluoride in an amount less than or more than the stoichiometric amount may also be used for the high-refractive index material or the low-refractive index material.

Preferably, the high-refractive index layer is a film containing the high-refractive index material as a main component, and the low-refractive index layer is a film containing the low-refractive index material as a main component. The main component as used herein is the component that accounts for the most proportion of the film, and is the component that usually accounts for about 50% by mass to 100% by mass, and even about 90% by mass to 100% by mass relative to the mass of the film. The film (for example, a vapor deposition film) can be formed by performing film formation using a film forming material (for example, a vacuum deposition source, a sputtering target, and the like) containing the high-refractive index material or the low-refractive index material as a main component. The same as above applies to the main component with respect to the film forming material. In some cases, the film or the film forming material contains unavoidable impurities. The film or the film forming material may contain other components such as inorganic substances and known additives to assist in film forming within a range of not diminishing the function of the main component.

As a method of forming a multilayer film, a known film forming method can be used. From the viewpoint of ease of film formation, film formation is preferably performed by vapor deposition. That is, each layer included in the multilayer film is preferably a vapor deposition film. The vapor deposition film means a film formed by vapor deposition. The "vapor deposition" in the present invention and the present specification includes a dry method, for example, a vacuum vapor deposition method, an ion plating method, a sputtering method, and the like. In the vacuum vapor deposition method, an ion beam assist method of simultaneously irradiating an ion beam during vapor deposition may be used. As the sputtering method, a direct current (DC) method, a radio frequency (RF) method, or the like may be used. As a result of the investigation by the present inventors, it has been newly found that performing simultaneous film formation by a vacuum vapor deposition method and a DC sputtering method is preferable for forming the carbon-containing porous layer. By adjusting the current value at the time of film formation by the vacuum vapor deposition method, the gas flow rate and input power at the time of film formation by the DC sputtering method, and the like, it is possible to control film properties such as carbon content and refractive index.

The multilayer film can be, for example, a multilayer film in which a high-refractive index layer and a low-refractive index layer are alternately laminated in a total number of 4 or more layers and 11 layers or less. The film thickness of the high-refractive index layer and the film thickness of the low-refractive index layer can be decided according to the layer configuration. Specifically, the combination of the layers to be included in the multilayer film and the film thickness of each layer can be decided by optical simulation by a known method based on the refractive indices of the film forming materials for forming the high-refractive index layer and the low-refractive index layer and the physical properties wished to be imparted to the spectacle lens by providing the multilayer film.

The multilayer film may include only one carbon-containing porous layer, or may include two or more layers. The carbon-containing porous layer is preferably located on the outermost layer of the multilayer film because it can contribute to reducing the surface resistance value of the spectacle lens. The carbon-containing porous layer can be a layer containing silicon oxide, and preferably a layer containing silicon oxide as a main component. The multilayer film having a carbon-containing porous layer containing silicon oxide can also include one or more layers containing silicon oxide other than the carbon-containing porous layer as a low-refractive index layer. The low-refractive index layer is preferably a layer containing silicon oxide as a main component.

Examples of the high-refractive index layer included in the multilayer film include a layer containing a zirconium oxide, a layer containing a niobium oxide, and a layer containing a tantalum oxide, and these layers are preferably layers containing the above oxide as a main component.

In the multilayer film, the high-refractive index layer and the low-refractive index layer may be in direct contact with each other, and at least one laminated structure may be included in which a conductive oxide layer described below exists between the high-refractive index layer and the low-refractive index layer. Since the carbon-containing porous layer included in the multilayer film may contribute to reducing the surface resistance of the spectacle lens, the spectacle lens may not include a conductive oxide layer described below.

The film thickness of each layer of the high-refractive index layer and the low-refractive index layer included in the multilayer film can be, for example, 1 to 500 nm, and the total thickness of the multilayer film can be, for example, 100 to 900 nm (in a case where the conductive oxide layer is included, the thickness of the conductive oxide layer is also included).

In addition to the above-described high-refractive index layer and low-refractive index layer, the multilayer film may include, at an arbitrary position within the multilayer film, one or more layers containing a conductive oxide (also referred to as a "conductive oxide layer"). The conductive oxide layer can be a layer mainly composed of a conductive oxide, and is preferably a vapor deposition film of a conductive oxide formed by deposition using a deposition source mainly composed of a conductive oxide.

From the viewpoint of transparency of the spectacle lens, preferred examples of the conductive oxide layer include a tin-doped indium oxide (ITO) layer having a film thickness of 10 nm or less, a tin oxide layer having a film thickness of 10 nm or less, and a titanium oxide layer having a film thickness of 10 nm or less. The term "tin-doped indium oxide (ITO) layer" refers to a layer mainly composed of ITO. This also applies to the tin oxide layer and the titanium oxide layer. In the present invention and specification, the tin-doped indium oxide (ITO) layer having a film thickness of 10 nm or less, the tin oxide layer having a film thickness of 10 nm or less, and the titanium oxide layer having a film thickness of 10 nm or less that are included in the multilayer film shall not be regarded as the "high-refractive index layer" or the "low-refractive index layer". In other words, even if one or more of these layers are included in the multilayer film, these layers are not regarded as the "high-refractive index layer" or "low-refractive index layer". The film thickness of the conductive oxide layer having a thickness of 10 nm or less may be, for example, 0.1 nm or more.

Another functional film may be formed on the multilayer film. Such a functional film may be various functional films such as a water repellent or hydrophilic anti-fouling film and anti-fogging film. A known technique can be applied for these functional films.

### <Reflection Characteristics of Spectacle Lens Surface>

In the spectacle lens,
(1) in a case where the multilayer film including a carbon-containing porous layer is located on an object-side surface of the lens substrate, an average reflectance of the object-side surface of the spectacle lens in a wavelength region of 400 to 700 nm is 0.500% or less, and
(2) in a case where the multilayer film including a carbon-containing porous layer is located on an eyeball-side surface of the lens substrate, an average reflectance of the eyeball-side surface of the spectacle lens in a wavelength region of 350 to 700 nm is 0.800% or less.

Satisfying at least one of the above (1) and (2) can contribute to suppressing the appearance of reflected light from the spectacle lens in images taken through a camera. That is, satisfying at least one of the above (1) and (2) can contribute to improving the appearance quality of the spectacle lens.

In a case where the spectacle lens has the multilayer film including a carbon-containing porous layer only on either the object side or the eye side, the spectacle lens satisfies the above (1) or (2). In a case where the spectacle lens has the multilayer film including a carbon-containing porous layer on both the object side and the eye side, the spectacle lens satisfies the above (1) and (2). The multilayer film including the carbon-containing porous layer may contribute to reducing the reflectance of the spectacle lens surface. In addition, the multilayer film including the carbon-containing porous layer can contribute to making it difficult for the spectacle lens to reflect light from the screen.

The average reflectance in the above (1) is 0.500% or less, preferably 0.150% or less, more preferably 0.100% or less, and even more preferably 0.050% or less. The average reflectance in the above (1) may be, for example, 0.001% or more, 0.005% or more, or 0.010% or more. However, from the viewpoint of improving the appearance quality of the spectacle lens, since the average reflectance in the above (1) is more preferable the lower it is, the average reflectance in the above (1) may be lower than the values exemplified herein.

The average reflectance in the above (2) is 0.800% or less, preferably 0.500% or less, more preferably 0.480% or less, and even more preferably 0.300% or less, 0.200% or less, 0.100% or less, and 0.050% or less, in that order. The average reflectance in the above (2) may be, for example, 0.001% or more, 0.005% or more, 0.010% or more, 0.020% or more, or 0.030% or more. However, from the viewpoint of improving the appearance quality of the spectacle lens, since the lower the average reflectance in the above (2), the more preferable it is, the average reflectance in the above (2) may be lower than the values exemplified herein.

### <Lens Substrate>

The lens substrate of the spectacle lens can be a plastic lens substrate or a glass lens substrate. For example, the glass lens substrate can be a lens substrate made of inorganic glass. The lens substrate is preferably a plastic lens substrate because it is lightweight and resistant to breakage. Examples of plastic lens substrates include styrene resins including (meth)acrylic resins, polycarbonate resins, allyl resins, allyl carbonate resins such as diethylene glycol bisallyl carbonate resins (CR-39), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and cured products (generally referred to as transparent resins) obtained by curing a curable composition containing a (thio)epoxy compound having one or more disulfide bonds in the molecule. The curable composition can also be referred to as a polymerizable composition. The lens substrate may contain a known additive. Examples of the additive may include an ultraviolet absorber. The lens substrate containing an ultraviolet absorber can reduce the amount of ultraviolet light entering from the object-side surface and then entering the eye of a spectacle wearer.

As the lens substrate, an undyed substrate (colorless lens) may be used or a dyed substrate (dyed lens) may be used. The refractive index of the lens substrate may be, for example, about 1.50 to 1.76. However, the refractive index of the lens substrate is not limited to the above range, and may be within the above range or may be above or below outside of the above range. In addition, the lens substrate may be a lens with optical power (so-called prescription lens) or a lens without optical power (so-called non-prescription lens).

This spectacle lens can be various lenses including a monofocal lens, a multifocal lens and a progressive power lens. The type of the lens is normally determined by the surface shapes of both surfaces of the lens substrate. The surface of the lens substrate may be a convex surface, a concave surface, or a flat surface. In a general lens substrate and spectacle lens, the object-side surface is a convex surface and the eyeball-side surface is a concave surface. However, the present invention is not limited thereto.

### [Spectacles]

Another aspect of the present invention relates to spectacles having the spectacle lens according to the above-mentioned aspect of the present invention. Details of the spectacle lens included in the spectacles are as described above. By including the spectacle lens in the spectacles, good appearance can be provided. The configuration of the spectacles such as a frame is not especially limited, and a known technique may be applied.

### Example

Hereinafter, the present invention will be described in more detail by way of examples. However, the present invention is not limited to embodiments shown in examples.

### [Method of Forming Multilayer Film]

In Examples 1 to 3 and Comparative Examples 1 and 2, on both the eyeball side and the object side, the multilayer vapor deposition film was formed by sequentially laminating the first layer, second layer, and so on, using the deposition sources shown from top to bottom in the table shown later, in order from the lens substrate side (hard coat side) toward the spectacle lens surface side, so that the outermost layer on the spectacle lens surface side would be the layer formed using the deposition source shown in the lowermost row of each table. In the examples and the comparative examples, the deposition sources containing the oxides indicated in the table excluding impurities that could be unavoidably contaminated were used, and each layer having the thickness indicated in the table was sequentially formed. The film thickness is a physical thickness, and the unit is nanometers (nm). In the table shown later, the layer described as a "porous layer" is a layer whose filling factor calculated from the refractive index was 0.95 or less. For other layers, it was confirmed that the filling factor calculated from the refractive index was about 0.98 and does not correspond to the porous layer.

In Examples 1 to 3 and Comparative Examples 1 and 2, a multilayer vapor deposition film having the layer structure shown in the table below was formed on each hard coat surface on the convex surface side (object side) and the concave surface side (eyeball side) of a plastic lens substrate (colorless lens) in which both surfaces were optically finished and previously provided with a hard coat (indicated as "HC" in the table shown later), the object-side surface being a convex surface and the eyeball-side surface being a concave surface.

Each layer confirmed not to correspond to the porous layer was formed by an ion beam assist method using oxygen gas and argon gas as assist gases.

In Examples 1 to 3, the method of forming a layer confirmed to be a porous layer will be described below.

Hereinafter, a layer that has been confirmed not to correspond to the porous layer and is formed using a SiO₂ vapor deposition source is referred to as an "SiO₂ layer", a layer formed using a ZrO₂ vapor deposition source is referred to as a "ZrO₂ layer", and a layer formed using a TiO₂ vapor deposition source is referred to as a "TiO₂ layer". A layer formed using a SiO₂ vapor deposition source and confirmed to be a porous layer is referred to as an "SiO₂ porous layer".

### [Refractive Index of Each Layer]

The refractive index of each layer was determined by the following method.

A single-layer film was formed on the glass substrate under the same film forming conditions as those of each layer of the multilayer film to obtain a laminate of the glass substrate and the single-layer film.

The surface reflectance of the surface of the laminate on which the single-layer film was formed was measured with a lens reflectance measurement device USPM-RU manufactured by Olympus Corporation, and the refractive index was obtained by optical thin film analysis of the obtained spectral reflectance.

The refractive index of each layer other than the porous layer in the multilayer films prepared in examples and comparative examples were the following values.
SiO₂ layer: 1.47
ZrO₂ layer: 2.08
TiO₂ layer: 2.42

The refractive index of the SiO₂ porous layer in the multilayer film prepared in Examples 1 to 3 obtained by the above method was the following values.
SiO₂ porous layer of Example 1 (object side and eyeball side): 1.23
SiO₂ porous layer of Example 2 (object side and eyeball side): 1.38
SiO₂ porous layer of Example 3 (object side and eyeball side): 1.32

### [Carbon Content of SiO₂ Porous Layer]

In the multilayer films prepared in Examples 1 to 3, the carbon content of the SiO₂ porous layer as determined by quantitative analysis by RBS were the following values.
SiO₂ porous layer of Example 1 (object side and eyeball side): 9.3 atomic%
SiO₂ porous layer of Example 2 (object side and eyeball side): 14.3 atomic%
SiO₂ porous layer of Example 3 (object side and eyeball side): 5.6 atomic%

### [Reflection Characteristics of Spectacle Lens Surface]

Normal incident reflection characteristics at the optical center were measured on both the object-side surface and the eyeball-side surface of each of the spectacle lenses of Examples 1 to 3 and Comparative Examples 1 and 2. The measurements were performed using a spectrophotometer (UH4150, manufactured by Hitachi High-Tech Corporation) with a measurement pitch of 1 nm, under measurement conditions set to normal incidence.

From the normal incident reflection characteristics measured as described above, the average reflectance in the wavelength region of 400 to 700 nm on the object-side surface and the average reflectance in the wavelength region of 350 to 700 nm on the eyeball-side surface were determined.

### [Example 1]

The SiO₂ porous layers on the object side and the eyeball side were formed by simultaneous film formation of a vacuum vapor deposition method and a DC sputtering method using oxygen gas and argon gas. The current value at the time of film formation by the vacuum vapor deposition method was set to 250 mA, and the gas flow rate at the time of film formation by the DC sputtering method was oxygen gas: 500 sccm, argon gas: 1000 sccm, and the input power was set to 500 W.

**[Table 1]**

| Example 1: Layer Configuration of Multilayer Film | | | |
|---|---|---|---|
| Object side | | Eyeball side | |
| Lens substrate | | Lens substrate | |
| HC | 3000 | HC | 3000 |
| SiO₂ | 17 | SiO₂ | 6 |
| ZrO₂ | 4 | ZrO₂ | 5 |
| SiO₂ | 70 | SiO₂ | 63 |
| ZrO₂ | 7 | ZrO₂ | 7 |
| SiO₂ | 225 | SiO₂ | 209 |
| ZrO₂ | 22 | ZrO₂ | 19 |
| SiO₂ | 27 | SiO₂ | 36 |
| ZrO₂ | 77 | ZrO₂ | 39 |
| SiO₂ | 28 | SiO₂ | 42 |
| ZrO₂ | 24 | ZrO₂ | 19 |
| SiO₂ porous layer | 113 | SiO₂ porous layer | 109 |

**[Table 2]**

| Example 1: Reflection Characteristics of Spectacle Lens Surface | | | |
|---|---|---|---|
| Object side | | Eyeball side | |
| Average reflectance 400-700nm (%) | 0.013 | Average reflectance 400-700nm (%) | - |
| Average reflectance 350-700nm (%) | - | Average reflectance 350-700nm (%) | 0.035 |

### [Example 2]

Both the SiO₂ porous layers on the object side and the eyeball side were formed by simultaneous film formation of a vacuum vapor deposition method and a DC sputtering method using oxygen gas and argon gas. The current value at the time of film formation by the vacuum vapor deposition method is 250 mA, and the gas flow rate at the time of film formation by the DC sputtering method is oxygen gas: 150 sccm, argon gas: 150 sccm and the input power was 1000 W.

**[Table 3]**

| Example 2: Layer Configuration of Multilayer Film | | | |
|---|---|---|---|
| Object side | | Eyeball side | |
| Lens substrate | | Lens substrate | |
| HC | 3000 | HC | 3000 |
| SiO₂ | 112 | SiO₂ | 168 |
| ZrO₂ | 12 | ZrO₂ | 16 |
| SiO₂ | 41 | SiO₂ | 28 |
| ZrO₂ | 73 | ZrO₂ | 77 |
| SiO₂ | 3 | SiO₂ | 10 |
| ZrO₂ | 51 | ZrO₂ | 29 |
| SiO₂ porous layer | 95 | SiO₂ porous layer | 89 |

**[Table 4]**

| Example 2: Reflection Characteristics of Spectacle Lens Surface | | | |
|---|---|---|---|
| Object side | | Eyeball side | |
| Average reflectance 400-700nm (%) | 0.125 | Average reflectance 400-700nm (%) | - |
| Average reflectance 350-700nm (%) | - | Average reflectance 350-700nm | 0.257 |

### [Example 3]

Both the SiO₂ porous layers on the object side and the eyeball side were formed by simultaneous film formation of a vacuum vapor deposition method and a DC sputtering method using oxygen gas and argon gas. The current value at the time of film formation by the vacuum vapor deposition method is 250 mA, and the gas flow rate at the time of film formation by the DC sputtering method is oxygen gas: 125 sccm, argon gas: 250 sccm and the input power was 500 W.

**[Table 5]**

| Example 3: Layer Configuration of Multilayer Film | | | |
|---|---|---|---|
| Object side | | Eyeball side | |
| Lens substrate | | Lens substrate | |
| HC | 3000 | HC | 3000 |
| ZrO₂ | 11 | ZrO₂ | 13 |
| SiO₂ | 60 | SiO₂ | 53 |
| ZrO₂ | 21 | ZrO₂ | 17 |
| SiO₂ porous layer | 113 | SiO₂ porous layer | 106 |

**[Table 6]**

| Example 3: Reflection Characteristics of Spectacle Lens Surface | | | |
|---|---|---|---|
| Object side | | Eyeball side | |
| Average reflectance 400-700nm (%) | 0.377 | Average reflectance 400-700nm (%) | - |
| Average reflectance 350-700nm (%) | - | Average reflectance 350-700nm | 0.434 |

### [Comparative Example 1]

**[Table 7]**

| Comparative Example 1: Layer Configuration of Multilayer Film | | | |
|---|---|---|---|
| Object side | | Eyeball side | |
| Lens substrate | | Lens substrate | |
| HC | 3000 | HC | 3000 |
| TiO₂ | 5 | TiO₂ | 6 |
| SiO₂ | 67 | SiO₂ | 64 |
| TiO₂ | 7 | TiO₂ | 5 |
| SiO₂ | 167 | SiO₂ | 118 |
| TiO₂ | 8 | TiO₂ | 12 |
| SiO₂ | 34 | SiO₂ | 35 |
| TiO₂ | 107 | TiO₂ | 101 |
| SiO₂ | 86 | SiO₂ | 82 |

**[Table 8]**

| Comparative Example 1: Reflection Characteristics of Spectacle Lens Surface | | | |
|---|---|---|---|
| Object side | | Eyeball side | |
| Average reflectance 400-700nm (%) | 0.137 | Average reflectance 400-700nm (%) | - |
| Average reflectance 350-700nm (%) | - | Average reflectance 350-700nm (%) | 0.485 |

### [Comparative Example 2]

**[Table 9]**

| Comparative Example 2: Layer Configuration of Multilayer Film | | | |
|---|---|---|---|
| Object side | | Eyeball side | |
| Lens substrate | | Lens substrate | |
| HC | 3000 | HC | 3000 |
| SiO₂ | 14 | SiO₂ | 36 |
| ZrO₂ | 3 | ZrO₂ | 3 |
| SiO₂ | 237 | SiO₂ | 369 |
| ZrO₂ | 11 | ZrO₂ | 7 |
| SiO₂ | 77 | SiO₂ | 14 |
| ZrO₂ | 6 | ZrO₂ | 7 |
| SiO₂ | 128 | SiO₂ | 31 |
| ZrO₂ | 27 | ZrO₂ | 48 |
| SiO₂ | 21 | SiO₂ | 9 |
| ZrO₂ | 71 | ZrO₂ | 53 |
| SiO₂ | 89 | SiO₂ | 84 |

**[Table 10]**

| Comparative Example 2: Reflection Characteristics of Spectacle Lens Surface | | | |
|---|---|---|---|
| Object side | | Eyeball side | |
| Average reflectance 400-700nm (%) | 0.292 | Average reflectance 400-700nm (%) | - |
| Average reflectance 350-700nm (%) | - | Average reflectance 350-700nm (%) | 0.613 |

### [Evaluation Method]

### <Reflection on PC Screen>

Spectacles including the respective spectacle lenses of Examples 1 to 3 and Comparative Examples 1 and 2 were prepared.

A sensory evaluation was conducted regarding the appearance of the spectacle wearer as seen in images taken through the PC camera, for each spectacle lens worn, by participants who attended an online meeting together with the spectacle wearer. The number of subjects was set to 10, and in the sensory evaluation, the subjects rated, with respect to the appearance of the spectacle wearer as seen in the image through the PC camera whether they felt that reflected light from the spectacle lens visible in the image, and the scorings were as follows: felt that reflection was not present (5 points), rather felt that reflection was not present (4 points), neither (3 points), rather felt that reflection was present (2 points), and felt that reflection was present (1 point). The arithmetic average of the scores given by the 10 subjects is shown in the table shown later. It can be said that the higher the score shown in the table, the better the appearance quality of the spectacle lens.

### <Surface Resistance Value>

When the surface resistance value is 9.9×10¹⁰ Ω/□ (ohm-per-square) or less in an environment of normal temperature and normal humidity, it can be said that there is a sufficient dust adhesion preventing effect.

In a room temperature environment without temperature and humidity control, the surface resistance values of both surfaces of the spectacle lens of each of the spectacle lenses of Examples 1 to 3 and Comparative Examples 1 and 2 were measured by a surface resistance meter. In a case where the surface resistance value of both surfaces was 9.9×10¹⁰ Ω/□ or less, it was evaluated as "OK". A case where the surface resistance value on both surfaces of the spectacle lens was more than 9.9×10¹⁰ Ω/□ or exhibited insulating properties was evaluated as "NG".

**[Table 11]**

| | Example 1 | Example 2 | Example 3 | uomparative Example 1 | Comparative Example 2 |
|---|---|---|---|---|---|
| Reflection on PC screen | 5 | 4 | 4 | 3 | 2 |
| Surface resistance value | OK | OK | OK | NG | NG |

From the above results, it can be confirmed that the spectacle lens of Examples 1 to 3 is superior in appearance quality and ease of handling to the spectacle lenses of Comparative Examples 1 and 2.

Various aspects described in the present specification may be combined in any combination of two or more.

The embodiments disclosed herein are only examples in all respects and should not be considered as restrictive. The scope of the present invention is not limited to the above description, but is defined by the scope of claims, and is intended to encompass equivalents to the scope of claims and all modifications within the scope of the claims.

### Industrial Applicability

The present invention is useful in the manufacturing fields of spectacle lenses and spectacles.

## Claims

1. A spectacle lens comprising:
a lens substrate; and
a multilayer film located on at least one surface of the lens substrate, wherein
the multilayer film includes one or more porous layers, the porous layer including carbon,
in a case where the multilayer film is located on an object-side surface of the lens substrate, an average reflectance of the object-side surface of the spectacle lens in a wavelength region of 400 to 700 nm is 0.500% or less, and
in a case where the multilayer film is located on an eyeball-side surface of the lens substrate, an average reflectance of the eyeball-side surface of the spectacle lens in a wavelength region of 350 to 700 nm is 0.800% or less.

2. The spectacle lens according to claim 1, wherein the multilayer film is provided on the object-side surface and the eyeball-side surface of the lens substrate, respectively,
the average reflectance of the object-side surface of the spectacle lens in the wavelength region of 400 to 700 nm is 0.500% or less, and
the average reflectance of the eyeball-side surface of the spectacle lens in the wavelength region of 350 to 700 nm is 0.800% or less.

3. The spectacle lens according to claim 2, wherein the average reflectance of the object-side surface of the spectacle lens in the wavelength region of 400 to 700 nm is 0.150% or less, and
the average reflectance of the eyeball-side surface of the spectacle lens in a wavelength region of 350 to 700 nm is 0.300% or less.

4. The spectacle lens according to claim 1, wherein a carbon content of the porous layer is 5.0 atomic% or more.

5. The spectacle lens according to claim 4, wherein a carbon content of the porous layer is 15.0 atomic% or less.

6. The spectacle lens according to claim 1, wherein the multilayer film includes one or more high-refractive index layers and one or more low-refractive index layers, and
a total number of layers of the high-refractive index layer and the low-refractive index layer is 4 or more and 11 or less.

7. The spectacle lens according to claim 6, wherein one or more of the low-refractive index layers are the porous layers.

8. The spectacle lens according to claim 7, wherein the porous layer is a silicon oxide-containing layer.

9. The spectacle lens according to claim 1, wherein a refractive index of the porous layer is 1.20 or more and 1.38 or less.

10. The spectacle lens according to claim 1, wherein the multilayer film includes one or more layers having a refractive index of 2.00 or more and 2.40 or less.

11. The spectacle lens according to claim 1, wherein the multilayer film includes one or more layers having a refractive index of 2.00 or more and 2.20 or less.

12. The spectacle lens according to claim 1, wherein the multilayer film includes one or more layers having a refractive index of 1.44 or more and 1.49 or less.

13. The spectacle lens according to claim 1, wherein the average reflectance of the object-side surface of the spectacle lens in the wavelength region of 400 to 700 nm is 0.150% or less,
the average reflectance of the eyeball-side surface of the spectacle lens in a wavelength region of 350 to 700 nm is 0.300% or less,
a carbon content of the porous layer is 5.0 atomic% or more and 15.0 atomic% or less,
the multilayer film includes one or more high-refractive index layers and one or more low-refractive index layers,
a total number of layers of the high-refractive index layer and the low-refractive index layer is 4 or more and 11 or less,
one or more of the low-refractive index layers are the porous layers,
the porous layer is a silicon oxide-containing layer,
a refractive index of the porous layer is 1.20 or more and 1.38 or less, and
the multilayer film includes one or more layers having a refractive index of 2.00 or more and 2.20 or less and one or more layers having a refractive index of 1.44 or more and 1.49 or less.

14. Spectacles comprising:
the spectacle lens according to any one of claims 1 to 13.
